(19) Europäisches Patentamt
European Patent Office
Office européen des brevets

(11) Veröffentlichungsnummer: **0 310 979 A2**

(12) # EUROPÄISCHE PATENTANMELDUNG

(21) Anmeldenummer: **88116280.4**

(22) Anmeldetag: **01.10.88**

(51) Int. Cl.4: **C08L 67/02 , C08K 7/14 , //(C08L67/02,51:04,25:12)**

(30) Priorität: **07.10.87 DE 3733840**

(43) Veröffentlichungstag der Anmeldung: **12.04.89 Patentblatt 89/15**

(84) Benannte Vertragsstaaten: **BE DE FR GB NL**

(71) Anmelder: **BASF Aktiengesellschaft
Carl-Bosch-Strasse 38
D-6700 Ludwigshafen(DE)**

(72) Erfinder: **Lausberg, Dietrich, Dr.
Nachtigalstrasse 32a
D-6700 Ludwigshafen(DE)**
Erfinder: **Ittemann, Peter, Dr.
Wilhelm-Busch-Strasse 87
D-6700 Ludwigshafen(DE)**
Erfinder: **McKee, Graham Edmund, Dr.
Kastanienweg 8
D-6940 Weinheim(DE)**
Erfinder: **Schlichting, Karl, Dr.
Virchowstrasse 12
D-6712 Bobenheim-Roxheim(DE)**
Erfinder: **Knoll, Manfred
Pfrimmstrasse 1
D-6521 Wachenheim(DE)**
Erfinder: **Seiler, Erhard, Dr.
Erpolzheimer Strasse 1
D-6700 Ludwigshafen(DE)**

(54) **Glasfaserverstärkte flammgeschützte thermoplastische Formmassen auf der Basis von Polyestern und Pfropfpolymerisaten.**

(57) Der Gehalt an Flammschutzmitteln in Formmassen, enthaltend Polyester ($a_1$), Acrylatpfropfpolymerisate ($a_2$), Styrol/Acrylnitril-Copolymerisate ($a_3$) und Glasfasern kann bei gleicher Flammbeständigkeit durch die Zugabe von feinteiligem PTFE verringert werden.

EP 0 310 979 A2

Xerox Copy Centre

## Glasfaserverstärkte flammgeschützte thermoplastische Formmassen auf der Basis von Polyestern und Pfropfpolymerisaten

Die Erfindung betrifft flammgeschützte thermoplastische Formmassen, enthaltend als wesentliche Komponenten

A) 45 bis 90 Gew.% einer Mischung aus

$a_1$) 50 bis 80 Gew.% eines Polyesters

$a_2$) 10 bis 25 Gew.% eines Pfropfpolymerisats aufgebaut aus

$a_{21}$) 50 bis 90 Gew.% einer Pfropfgrundlage aus einem kautschukelastischen Polymeren auf Basis von

$a_{211}$) 95 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen

$a_{22}$) 10 bis 50 Gew.% einer Pfropfauflage aus

$a_{221}$) 20 bis 90 Gew.% Styrol oder substituierten Styrolen der allgemeinen Formel I

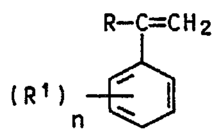

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und

$a_{222}$) 10 bis 80 Gew.% Acrylnitril oder Methacrylnitril oder deren Mischungen und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 50 Gew.% Acrylnitril oder Methacrylnitril oder deren Mischungen,

B) 4 bis 30 Gew.% eines Flammschutzmittels

C) 0 bis 15 Gew.% einer synergistisch wirkenden Metallverbindung eines Metalls der fünften Hauptgruppe des Periodensystems

D) 0,01 bis 3 Gew.% eines fluorhaltigen Ethylenpolymerisats, welches homogen verteilt in der Formmasse vorliegt und einen mittleren Teilchendurchmesser (Zahlenmittelwert) von 0,05 bis 10 $\mu$ aufweist, sowie darüber hinaus

E) bis 20 Gew.% einer polymeren Komponente mit Carboxyl-, Carboxylderivat-, Hydroxyl- oder Epoxygruppen, und

F) 5 bis 50 Gew.% Glasfasern.

Außerdem betrifft die Erfindung die Verwendung derartiger Formmassen zur Herstellung von Formkörpern und Formkörper, die aus den erfindungsgemäßen Formmassen als wesentliche Komponenten erhältlich sind.

In der DE-B-27 58 497 werden thermoplastische Formmassen auf der Basis von Polyestern und modifizierten Styrol/Acrylnitril (SAN)-Copolymeren beschrieben, wobei als Modifizierungsmittel Acrylester und/oder $\alpha$-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit. Über Brandeigenschaften der Massen wird nichts berichtet.

Aus der US-A-3 671 487 sind glasfaserverstärkte Polyesterformmassen bekannt, die ein Flammschutzmittel und eine geringe Menge, vorzugsweise 0,5 bis 2,5 Gew.% Polytetrafluorethylen (PTFE) enthalten. Ausweislich Spalte 5, Zeile 75 bis Spalte 6, Zeile 4 ist es vorteilhaft das PTFE in Form relativ großer Teilchen einzusetzen, da dies zu besseren Ergebnissen führe als die Verwendung von Teilchen mit

Durchmessern von 0,05 bis 0,5 µm. Diese Formmassen befriedigen hinsichtlich ihres Tropfverhaltens bei niedrigen PTFE-Konzentrationen, insbesondere unter 0,5 Gew.% nicht voll.

In der US-A-4 344 878 werden glasfaserfreie Formmassen aus Polyestern, Flammschutzmittel und PTFE beschrieben. Als bevorzugtes PTFE wird wie im oben erwähnten US-PS 3 671 487 Teflon-6 der Fa. DuPont beschrieben, d.h. ein PTFE mit großer Teilchengröße. Aus diesem Grund leiden auch diese Formmassen unter dem gleichen Mangel wie die in der US-A-3 671 487 beschriebenen Produkte.

In der DE-A-26 15 071 wird ein Verfahren zur Herstellung einer thermoplastischen Polyesterformmasse beschrieben, wobei ein Polyester mit Flammschutzmitteln und einer wäßrigen PTFE-Dispersion vermischt und anschließend der Polyester geschmolzen wird. Auch hier finden sich keine Andeutungen über die Bedeutung der Teilchengröße des PTFE im Endprodukt. Darüber hinaus treten bei dem Verfahren unter Umständen Probleme bei der homogenen Einarbeitung des PTFE in den Polyester auf.

Die in diesen Druckschriften beschriebenen Massen enthalten keine Copolymerisate vom SAN-Typ (Komponente $a_3$) und neigen daher bei der Herstellung von Formkörpern zu starkem Verzug und zu einer starken Formschwindung.

Der vorliegenden Erfindung lag daher die Aufgabe zugrunde, flammgeschützte thermoplastische Formmassen auf der Basis von Polyestern und Pfropfpolymeren zur Verfügung zu stellen, die die vorstehend beschriebenen Nachteile nicht aufweisen. Insbesondere sollte auch eine zufriedenstellende Langzeitstabilität der mechanischen Eigenschaften bei erhöhten Temperaturen sowie gute Schlagzähigkeitswerte und ein geringer Verzug und eine gute Oberflächenstruktur bei aus den Formmassen hergestellten Formkörpern erreicht werden.

Diese Aufgabe wird erfindungsgemäß durch die eingangs definierten thermoplastischen Formmassen gelöst.

Als Komponente A enthalten die erfindungsgemäßen Formmassen 45 bis 90, insbesondere 45 bis 80 und besonders bevorzugt 50 bis 55 Gew.% einer Mischung aus

$a_1$) 50 bis 80 Gew.% eines Polyesters

$a_2$) 10 bis 25 Gew.% eines Pfropfpolymerisats und

$a_3$) 10 bis 25 Gew.% eines Styrol-(Meth)-Acrylnitril-Copolymerisats.

Die in den erfindungsgemäßen Formmassen enthaltenen Polyester $a_1$) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, wie z.B. Polyethylenterephthalat oder Polybutylenterephthalat oder deren Mischungen werden besonders bevorzugt.

Die relative Viskosität $\eta_{spec}/c$ der Polyester, gemessen an einer 0,5 gew.%igen Lösung in einem Phenol/o-Dichlorbenzolgemisch (Gewichtsverhältnis 3:2) bei 25 °C liegt im allgemeinen im Bereich von 1,2 bis 1,8 dl/g.

Der Anteil der Polyester $a_1$) an der Komponente A beträgt 50 bis 80, vorzugsweise 50 bis 75 und insbesondere 50 bis 70 Gew.%, bezogen auf das Gesamtgewicht der Komponenten $a_1$) + $a_2$) + $a_3$).

Das Pfropfpolymerisat $a_2$), welches 10 bis 25, insbesondere 12 bis 25, besonders bevorzugt 12 bis 20 Gew.% der Komponente A ausmacht, ist aufgebaut aus

$a_{21}$) 50 bis 90 Gew.% einer Pfropfgrundlage auf Basis von

$a_{211}$) 95 bis 99,9 Gew.% eines $C_2$-$C_{10}$-Alkylacrylats und

$a_{212}$) 0,1 bis 5 Gew.% eines difunktionellen Monomeren mit zwei olefinischen, nicht konjugierten Doppelbindungen, und

$a_{22}$) 10 bis 50 Gew.% einer Pfropfauflage aus

$a_{221}$) 20 bis 90 Gew.% Styrol oder substituierten Styrolen der allgemeinen Formel I oder deren Mischungen, und

$a_{222}$) 10 bis 80 Gew.% Acrylnitril, Methacrylnitril, Acrylsäureestern oder Methacrylsäureestern oder deren Mischungen.

Bei der Komponente $a_{21}$) handelt es sich um ein Elastomeres, welches eine Glasübergangstemperatur von unter -20, insbesondere unter -30 °C aufweist.

Für die Herstellung des Elastomeren werden als Hauptmonomere $a_{211}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.%, bezogen auf das Gesamtgewicht $a_{211}$ + $a_{212}$, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $a_{21}$) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $a_{21}$) am Pfropfpolymerisat $a_2$) beträgt 50 bis 90, vorzugsweise 55 bis 85 und insbesondere 60 bis 80 Gew.%, bezogen auf das Gesamtgewicht von $a_2$).

Auf die Pfropfgrundlage $a_{21}$) ist eine Pfropfhülle $a_{22}$) aufgepfropft, die durch Copolymerisation von

$a_{221}$) 20 bis 90, vorzugsweise 30 bis 90 und insbesondere 30 bis 80 Gew.% Styrol oder substitierten Styrolen der allgemeinen Formel I

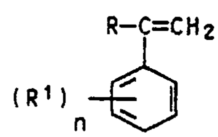

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$a_{222}$) 10 bis 80, vorzugsweise 10 bis 70 und insbesondere 20 bis 70 Gew.% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $a_{222}$) Glasübergangstemperaturen von mehr als 20 °C aufweisen; prinzipiell können jedoch auch andere Acrylsäureester eingesetzt werden, vorzugsweise in solchen Mengen, so daß sich insgesamt für die Komponente $a_{22}$) eine Glasübergangstemperatur Tg oberhalb 20 °C ergibt.

Besonders bevorzugt werden Ester der Acryl- oder Methacrylsäure mit $C_1$-$C_8$-Alkoholen und Epoxygruppen enthaltede Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger Tg zu bilden vorzugsweise in nicht zu hohem Anteil eingesetzt wird.

Die Pfropfhülle $a_{22}$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)-Acrylsäureestern.

Das Pfropfmischpolymerisat ($a_{21}$ + $a_{22}$) weist im allgemeinen eine mittlere Teilchengröße von 100 bis 1000 nm, im besonderen von 200 bis 700 nm ($d_{50}$-Gewichtsmittelwert) auf. Die Bedingungen bei der Herstellung des Elastomeren $a_{21}$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat $a_2$ zählen im Rahmen dieser Erfindung auch die bei der Pfropfmischpolymerisation zur Herstellung der Komponente $a_{22}$) entstehenden freien, nicht gepfropften Homo- und Copolymerisate.

Nachstehend seien einige bevorzugte Pfropfpolymerisate angeführt:

$a_2$/1: 60 Gew.% Pfropfgrundlage $a_{21}$) aus
$a_{211}$) 98 Gew.% n-Butylacrylat und
$a_{212}$) 2 Gew.% Dihydrodicyclopentadienylacrylat und
40 Gew.% Pfropfhülle $a_{22}$) aus
$a_{221}$) 75 Gew.% Styrol und
$a_{222}$) 25 Gew.% Acrylnitril

$a_2$/2: Pfropfgrundlage wie bei $a_2$/1 mit 5 Gew.% einer ersten Pfropfhülle aus Styrol
und
35 Gew.% einer zweiten Pfropfstufe aus
$a_{221}$) 75 Gew.% Styrol und
$a_{222}$) 25 Gew.% Acrylnitril

$a_3$/2: Pfropfgrundlage wie bei $a_2$/1 mit 13 Gew.% einer ersten Pfropfstufe aus Styrol und 27 Gew.% einer zweiten Pfropfstufe aus Styrol und Acrylnitril im Gewichtsverhältnis 3:1

Als Komponente $a_3$) enthalten die erfindungsgemäßen Formmassen 10 bis 25, vorzugsweise 12 bis 20 Gew.% eines Copolymerisats aus

$a_{31}$) 50 bis 90, vorzugsweise 55 bis 90 und insbesondere 65 bis 85 Gew.% Styrol und/oder substituierten Styrolen der allgemeinen Formel I und

$a_{32}$) 10 bis 50, vorzugsweise 10 bis 45 und insbesondere 15 bis 35 Gew.% Acrylnitril und/oder Methacrylnitril.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von $a_2$:$a_3$ liegt im Bereich von 1:2,5 bis 2,5:1, vorzugsweise von 1:2 bis 2:1 und insbesondere von 1:1,5 bis 1,5:1.

Der Anteil des Flammschutzmittels B) beträgt 4 bis 30, vorzugsweise 7 bis 25 Gew.%, bezogen auf das Gesamtgewicht der Formmassen. Die eingesetzte Menge hängt von der Art des Flammschutzmittels ab; in der Regel sollte sich bei halogenhaltigen Flammschutzmitteln ein Gesamthalogengehalt von 3 bis 10 Gew.% ergeben. Bei Verwendung von rotem Phosphor werden in der Regel 2 bis 10 Gew.% eingesetzt; phosphorhaltige organische Verbindungen werden entsprechend bemessen, so daß sich ein vergleichbarer Phosphorgehalt ergibt.

Die Flammschutzmittel B umfassen eine bekannte Gruppe chemischer Verbindungen. Allgemein enthalten die bedeutenderen dieser Verbindungen chemische Elemente, die wegen ihrer Fähigkeit, eine Flammbeständigkeit zu verleihen, verwendet werden, wie Brom, Chlor, Antimon, Phosphor und Stickstoff.

Zu den verwendbaren halogenhaltigen Verbindungen gehören solche der folgenden Formel:

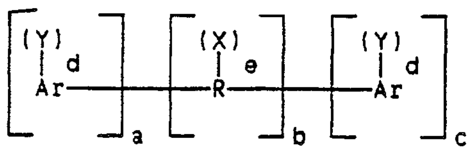

worin R $C_1$-$C_{10}$-Alkylen; Alkyliden oder eine cycloaliphatische Gruppe ist, wie Methylen, Ethylen, Propylen, Isopropylen, Isopropyliden, Butylen, Isobutylen, Amylen, Cyclohexylen, Cyclopentyliden, ferner kann R eine Ether-, Carbonyl-, Amino- oder eine schwefelhaltige Gruppe, wie Sulfid, Sulfoxid, Sulfon, oder eine phosphorhaltige Gruppe sein. R kann auch aus zwei oder mehr Alkylen- oder Alkylidengruppen bestehen, die durch eine aromatische Amino-, Ether-, Carbonyl-, Sulfid-, Sulfoxid-, Sulfon- oder eine phosphorhaltige Gruppe miteinander verbunden sind.

Ar und Ar′ sind gleiche oder verschiedene mono- oder polycarbocyclische aromatische Gruppen, wie Phenylen, Bipenylen, Terphenylen und Naphthylen.

Y ist ausgewählt aus organischen, anorganischen und organometallischen Resten. Die durch Y repräsentierten Substituenten umfassen.

1. Halogen, wie Chlor, Brom, Iod oder Fluor oder
2. Ethergruppen der allgemeinen Formel OE, wobei E ein X-ähnlicher, einwertiger Kohlenwasserstoffrest ist oder
3. einwertige Kohlenwasserstoffgruppen der durch R repräsentierten Art oder
4. andere Substituenten, wie Nitro und Cyano, wobei diese Substituenten im wesentlichen inert sind, vorausgesetzt, daß mindestens ein und vorzugsweise zwei Halogenatome pro Arylkern vorhanden sind.

X ist eine einwertige Kohlenwasserstoffgruppe, für die beispielsweise die folgenden Reste stehen können: $C_1$-$C_{10}$-Alkyl wie Methyl, Ethyl, Propyl, Isopropyl, Butyl, Decyl, Aryl wie Phenyl, Naphthyl, Biphenyl, Xylyl und Tolyl, Aralkyl wie Benzyl und Ethylphenyl, Cycloalkyl wie Cyclopentyl und Cyclohexyl, ebenso wie einwertige Kohlenwasserstoffgruppen, die inerte Substituenten aufweisen. Sind mehrere Substituenten X vorhanden, können diese gleich oder verschieden sein.

Der Parameter d ist eine ganze Zahl von 1 bis zum Maximaläquivalent der ersetzbaren Wasserstoffe an den aromatischen Ringen Ar und Ar'. Der Parameter e ist eine ganze Zahl von 0 bis zu der Zahl ersetzbarer Wasserstoffe an den Substituenten R. Die Parameter a, b und c sind ganze Zahlen einschließlich 0. Wenn b nicht 0 ist können weder a noch c 0 sein. Wenn b gleich 0 ist, sind die aromatischen Gruppen durch eine direkte Kohlenwasserstoff-Kohlenwasserstoff-Bindung miteinander verbunden.

Die Substituenten Y an den aromatischen Gruppen Ar und Ar' können in Ortho-, Meta- oder Parastellung stehen.

In den Rahmen der obigen Formel fallen Biphenyle, von denen die folgenden Beispiele genannt seien:
2,2-Bis-(3,5-dichlorphenyl)propan
Bis-(2-chlorphenyl)methan
Bis-(2,6-dibromphenyl)methan
1,1-Bis-(4-iodphenyl)ethan
1,2-Bis-(2,6-dichlorphenyl)ethan
1,1-Bis-(2-chlor-4-iodphenyl)ethan
1,1-Bis-(2-chlor-4-methylphenyl)ethan
1,1-Bis-(3,5-dichlorphenyl)ethan
2,2-Bis-(3-phenyl4-bromphenyl)ethan
2,6-Bis-(4,6-dichlornaphthyl)propan
2,2-Bis-(2,6-dichlorphenyl)pentan
2,2-Bis-(3,5-dichlorphenyl)hexan
Bis-(4-chlorphenyl)phenylmethan
Bis-(3,5-dichlorphenyl)cyclohexylmethan
Bis-(3-nitro-4-bromphenyl)methan
Bis-(4-hydroxy-2,6-dichlor-3-methoxyphenyl)-methan
2,2-Bis-(3,5-dichlor-4-hydroxyphenyl)propan
2,2-Bis-(3-brom-4-hydroxyphenyl)propan

Weitere unter die obige Formel fallende Verbindungen sind 2,2′-Dichlordiphenyl, 2,4′-Dichlor- oder 2,4′-Dibromdiphenyl, Hexa-, Octa- oder Decabromodiphenyle und halogenierte Diphenylether, insbesondere Octabrom- und Decabromdiphenylether.

Die Herstellung dieser und anderer anwendbarer Biphenyle ist bekannt. Anstelle der in den obigen Beispielen vorhandenen zweiwertigen aliphatischen Gruppe kann auch eine Sulfidgruppe, eine Sulfoxygruppe oder eine ähnliche andere Gruppe stehen.

Bevorzugte Phosphorverbindungen sind elementarer Phosphor oder organische Phosphorsäure, Phosphonate, Phosphinate, Phosphonite, Phosphinite, Phosphenoxyde, Phosphene, Phosphite oder Phosphate. Als Beispiel sei Triphenylphosphenoxide genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die in der vorliegenden Erfindung verwendet werden können, sind solche der folgenden allgemeinen Formel

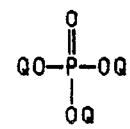

worin Q für gleiche oder verschiedene Reste steht, einschließlich Kohlenwasserstoffresten, wie Alkyl, Cycloalkyl, Aryl, alkylsubstituiertes Aryl und arylsubstituiertes Alkyl, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3,5,5′-tri-methylhexylphosphat), Ethyldiphenylphosphat, 2-Ethylhexyldi(p-tolyl)phosphat, Diphenylhydrogenphosphat, Bis-(2-ethylhexyl)phenylphosphat, Tri-(nonylphenyl)phosphat, Phenylmethylhydrogenphosphat, Di(dodecyl)-p-tolylphosphat, Tricresylphosphat, Triphenylphosphat, Dibutylphenylphosphat, Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, Wie Phosphonitrilchlorid, Phosphorsäureesteramide, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind käuflich erhältlich.

Weiter halogenhaltige Flammschutzmittel sind Tetrabrombenzol, Hexachlorbenzol und Hexabrombenzol sowie halogenierte Polystyrole oder Polyphenylenether, wie sie kommerziell erhältlich sind.

Auch die in der DE-A-19 46 924 beschriebenen halogenierten Phthalimide können verwendet werden. Von diesen hat insbesondere N,N′-Ethylenbistetrabromphthalimid, welches unter der Bezeichnung Saytex BT 93 im Handel erhältlich ist, Bedeutung erlangt.

Schließlich seien als Beispiele für phosphorfreie halogenhaltige Flammschutzmittel noch bromierte Oligocarbonate der allgemeinen Formel

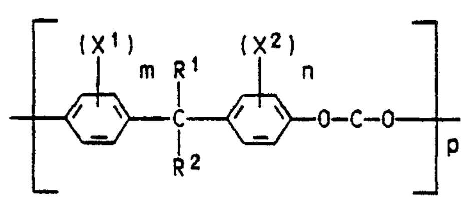

genannt, wobei

$R^1$ und $R^2$ ein Wasserstoffatom, eine $C_1$-$C_4$-Alkylgruppe oder eine Arylgruppe,

$X^1$ und $X^2$ Chlor oder Brom darstellen,

m und n einen Wert von 1, 2, 3 oder 4 und p einen Wert im Bereich von 2 bis 20 haben.

Diese oligomeren Additive weisen auch bei Temperaturen über 200° C eine geringe Flüchtigkeit auf.

Als Komponente C enthalten die erfindungsgemäßen Formmassen 0 bis 15 Gew.%, vorzugsweise 3 bis 12 Gew.% einer synergistisch wirkenden Metallverbindung eines Metalls der fünften Hauptegruppe des Pericdensystems. Hier sei als Beispiel nur Antimontrioxid erwähnt, welches besonders bevorzugt wird.

Bei den fluorhaltigen Ethylenpolymerisaten D, die homogen in der Formmasse verteilt vorliegen, handelt

es sich um Polymerisate des Ethylens mit einem Fluorgehalt von etwa 55 bis 76 Gew.%, vorzugsweise 70 bis 76 Gew.%. Beispiele hierfür sind Polytetrafluorethylen (PTFE), Tetrafluorethylen-Hexafluorethylen-Copolymere oder Tetrafluorethylen-Copolymerisate mit kleineren Anteilen (in der Regel bis zu 50 Gew.%) copolymerisierbarer ethylenisch ungesättigter Monomerer. Diese werden zum Beispiel von Schildknecht in "Vinyl and Related Polymers", Wiley-Verlag, 1952, Seite 484 bis 494 und von Wall in "Fluorpolymers" (Wiley Interscience, 1972) beschrieben. Wesentlich ist, daß die Komponente D homogen verteilt in der Formmasse vorliegt und eine Teilchengröße $d_{50}$ (Zahlenmittelwert) im Bereich von 0,05 bis 10, vorzugsweise von 0,1 bis 5 µm aufweist. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen. Darauf wird weiter unten ausführlich eingegangen. Der Anteil der Komponente D beträgt 0,01 bis 3, vorzugsweise 0,1 bis 2,0 Gew.%, bezogen auf das Gesamtgewicht der Formmasse.

Als Komponente E enthalten die erfindungsgemäßen Formmassen bis zu 20, vorzugsweise 1 bis 15 und insbesondere 2 bis 12 Gew.% einer polymeren Komponente mit Carboxyl-, Carboxylderivat-, Hydroxyl- oder Epoxygruppen.

Grundsätzlich eignen sich alle Arten von Polymerisaten, in denen die Carboxyl-, Hydroxyl- oder Epoxygruppen im wesentlichen frei zur Verfügung stehen.

Nachstehend werden einige besonders bevorzugte Beispiele derartiger funktioneller Polymerer näher beschrieben.

Als erste Gruppe seien hier elastomere Polymere mit Epoxy- und/oder Carboxylgruppen an der Oberfläche genannt.

Für die Erfindung ist dabei wesentlich, daß die haftvermittelnden Epoxy-und/oder Carboxylgruppen an der Oberfläche vorhanden sind und daß der Gelgehalt mindestens 50 % beträgt.

Die Epoxy- und/oder Carboxylgruppen wirken vermutlich als Haftvermittler zwischen dem Polyester $a_1$) und dem Pfropfpolymeren $a_2$). Ob diese Haftvermittlung auf der Bildung kovalenter chemischer Bindungen oder auf physikalischen Wechselwirkungen (von der Waals, Dipol-Dipol etc.) beruht, kann noch nicht mit Sicherheit gesagt werden.

Vorzugsweise werden durch Emulsionspolymerisation hergestellte Pfropfpolymere mit Glasübergangstemperaturen unter 0 °C und Gelgehalten von mehr als 50 % eingesetzt.

Der hohe Gelgehalt des elastomeren Polymerisats bringt eine Verbesserung der mechanischen Eigenschaften und der Oberflächengüte der Formmassen mit sich. Der hohe Gelgehalt bringt es auch mit sich, daß die Fließfähigkeit der Polymeren E) nur sehr gering ist, so daß ein Schmelzindex häufig unter normalen Bedingungen nicht bestimmbar ist. Die Polymeren zeigen vielmehr ein elastisches Verhalten, d.h. sie reagieren auf die Einwirkung einer formverändernden Kraft mit einer elastischen Rückstellkraft (vgl. B. Vollmert, Grundriß der makromolekularen Chemie, Bd. IV, S. 85 ff, E. Vollmert, Verlag Karlsruhe 1979).

Bedingt durch ihre Herstellung in Emulsion liegen die Teilchen der Komponente E) als vernetzte Dispersionsteilchen vor.

Die elastomeren Pfropfpolymere, die aus einem in Emulsion hergestellten Kautschuk mit einer Glasübergangstemperatur von unter 0 °C aufgebaut sind, und an der Oberfläche Epoxy- oder Carboxylgruppen aufweisen, können durch Emulsionspolymerisation in an sich bekannter Weise, wie sie z.B. in Houben-Weyl, Methoden der organischen Chemie, Band XII. I (1961) beschrieben wird, hergestellt werden. Die verwendbaren Emulgatoren und Katalysatoren sind an sich bekannt.

Nur stellvertretend seien hier als Monomere für die Herstellung des Kautschuks Acrylate wie z.B. n-Butylacrylat und 2-Ethylhexylacrylat, Methacrylate sowie Butadien und Isopren genannt. Diese Monomeren können auch mit anderen Monomeren wie z.B. Styrol, Acrylnitril und Vinylethern copolymerisiert werden.

Monomere, die eine Kopplung an die Komponente A) bewirken können, sind solche, die Epoxy und/oder Carboxyl-Gruppen enthalten. Beispiele für solche Monomeren sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Die durch Emulsionspolymerisation hergestellten Pfropfpolymeren (Dispersionspolymeren) können mehrschalig sein, z.B. kann der Kern und die äußere Schale gleich sein, außer daß die äußere Schale zusätzliche Gruppen enthält, die eine Haftung der Komponente A) ermöglicht. Beispiele dafür sind ein innerer Kern aus n-Butylacrylat und eine äußere Schale aus n-Butylacrylat und Glycidylmethacrylat, oder ein innerer Kern aus Butadien und einer äußeren Schale aus Butadien und Glycidylmethacrylat. Der Kern und die Schale können jedoch auch verschieden aufgebaut sein, z.B. ein innerer Kern aus Butadien und eine äußere Schale aus n-Butylacrylat und Glycidylmethacrylat.

Natürlich kann der Kautschuk auch homogen aufgebaut sein, z.B. einschalig aus einem Copolymer von n-Butylacrylat und Glycidylmethacrylat oder Butadien und Glycidylmethacrylat.

Die Kautschukteilchen können auch vernetzt sein. Als Vernetzer wirkende Monomere sind beispielsweise Butadien, Divinylbenzol, Diallylphthalat und Dihydrodicyclopentadienylacrylat geeignet. Der Anteil dieser Vernetzer an der Komponente B) beträgt vorzugsweise unter 5 Gew.%, bezogen auf E).

Als weitere Beispiele für die Komponente B) seien Copolymere, aufgebaut aus Styrol und/oder substituierten Styrolen der allgemeinen Formel I und Epoxy- oder Lactamgruppen enthaltenden Monomeren genannt.

Der Anteil des Styrols und/oder der substituierten Styrole an der Komponente B liegt im allgemeinen im Bereich von 50 bis 99,9 Gew.%, vorzugsweise von 70 bis 95 Gew.%.

Selbstverständlich können auch Mischungen verschiedener substituierter Styrole oder Mischungen aus Styrol und substituierten Styrolen eingesetzt werden, was häufig sogar Vorteile mit sich bringt.

Durch Mitverwendung von Monomeren mit Epoxy- oder Lactamgruppen bei der Polymerisation des Styrols und/oder der substituierten Styrole werden die erfindungsgemäßen Komponenten B, die sich von Styrolpolymerisaten ableiten, hergestellt.

Unter den Monomeren, die Epoxygruppen

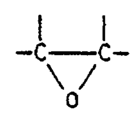

enthalten, werden solche mit mehreren Epoxygruppen bevorzugt. Grundsätzlich sind alle Epoxygruppen enthaltenden Monomeren geeignet, solange gewährleistet ist, daß die Epoxygruppe nach der Umsetzung in freier Form vorliegt.

Es sei hier erwähnt, daß die Einführung der freien Epoxygruppen in das Polymere B auch durch Epoxidierung von Polymeren aus den Monomeren mit Epoxidierungsmitteln möglich ist.

Der Anteil des Epoxygruppen enthaltenden Monomeren beträgt 0,1 bis 30 Gew.%, bevorzugt 0,5 bis 20 Gew.% und besonders bevorzugt 1 bis 10 Gew.%, bezogen auf die Komponente E).

Nur beispielhaft seien hier als Vertreter für Epoxygruppen enthaltende Monomere Glycidylgruppen enthaltende Monomere genannt, z.B. Vinylglycidylether, Allylglycidylether und (Meth)acrylate mit Glycidylgruppen, insbesondere Glycidylacrylat und Glycidylmethacrylat.

Als bevorzugte Komponenten E), die sich von Styrolpolymerisaten mit Epoxygruppen ableiten, seien stellvertretend Copolymere aus

$E_1$) 90 bis 99 Gew.% Styrol, $\alpha$-Methylstyrol und/oder p-Methylstyrol
$E_2$) 1 bis 10 Gew.% Glycidyl(meth)acrylat

oder

$E_1$) 50 bis 91 Gew.% Styrol, $\alpha$-Methylstyrol und/oder p-Methylstyrol
$E_2$) 1 bis 10 Gew.% Glycidyl(meth)acrylat
$E_3$) 8 bis 40 Gew.% Acrylnitril und/oder Methacrylnitril

genannt.

Als zweite Gruppe von Monomeren sind Lactamgruppen enthaltende Monomere geeignet.

Diese enthalten eine Lactamgruppe der allgemeinen Formel

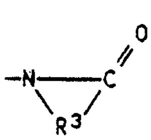

wobei $R^3$ eine verzweigte oder lineare Alkylengruppe mit 2 bis 15 C-Atomen darstellt.

Nur stellvertretend seien hier β-Propiolactame (Azetidin-2-one) der allgemeinen Formel

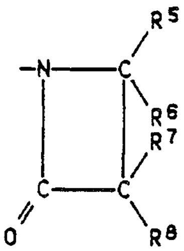

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3′-Dimethyl-3-propiolactam, 2-Pyrrolidone

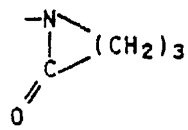
,

ε-Caprolactam

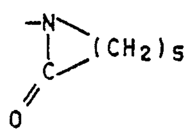
,

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in

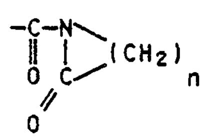

über eine Carbonylgruppe am Stickstoff in die entsprechenden Monomeren eingebaut.

Ein besonders bevorzugtes Beispiel hierfür ist N-(Meth)acryloyl-ε-Caprolactam

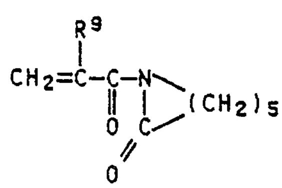

wobei $R^9$ ein Wasserstoffatom oder eine Methylgruppe ist.

Der Anteil der Monomeren mit Lactamgruppen an den Komponenten B beträgt 0,1 bis 30 Gew.%, vorzugsweise 0,1 bis 5 Gew.%, bezogen auf die Komponente E).

Daraus ergeben sich für Komponente E) beispielsweise folgende Zusammensetzungen

$E_1$) 95 bis 99,9 Gew.% Styrol, α-Methylstyrol und/oder p-Methylstyrol

$E_2$) 0,1 bis 5 Gew.% N-(Meth)acryloyl-ε-caprolactam

oder, falls Monomere $E_3$ enthalten sind

$E_1$) 55 bis 91 % Styrol, α-Methylstyrol und/oder p-Methylstyrol
$E_2$) 0,1 bis 5 Gew.% N-(Meth)acryloyl-ε-caprolactam
$E_3$) 8 bis 40 Gew.% (Meth)acrylnitril.

Als polymere Komponenten mit Hydroxylgruppen sind prinzipiell alle Polymere mit Hydroxylgruppen, die im wesentlichen frei zur Verfügung stehen, geeignet.

Als erste Gruppe besonders geeigneter Polymerer dieses Typs sind Polykondensate aus aliphatischen oder aromatischen Diolen oder höherwertigen Alkoholen mit Epihalogenhydrinen zu nennen. Derartige Verbindungen und Verfahren zu ihrer Herstellung sind dem Fachmann an sich bekannt, weshalb sich hier nähere Angaben erübrigen. Nur als Beispiele seien hier die Polykondensate aus Epihalogenhydrinen und Dihydroxyverbindungen, die auch zur Herstellung von Polycarbonaten eingesetzt werden können, genannt, die sich als besonders vorteilhaft herausgestellt haben. Daneben sind aber grundsätzlich auch andere, insbesondere aliphatische Diole oder höherwertige aromatische oder aliphatische Alkohole geeignet.

Wegen der leichten Zugänglichkeit wird ein Polykondensat aus Bisphenol A und Epichlorhydrin mit der Struktur

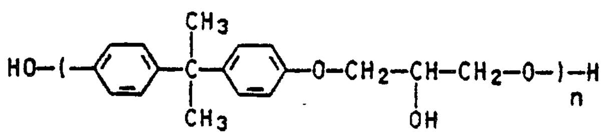

bevorzugt verwendet, welches unter der Bezeichnung Phenoxy® im Handel erhältlich ist.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymeren als Pfropfgrundlagen geeignet sind, die mit den Komponenten $a_1$), $a_2$) und $a_3$) nicht vollkommen unverträglich sind. Ein gewisser Grad an Unverträglichkeit kann durch eine Erhöhung des Anteils der Hydroxylgruppen ausgeglichen werden.

Geeignete Komponenten E) sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere der Komponente E) mit der Komponente A) ist. Je besser die Verträglichkeit, desto geringer kann der Anteil der OH-Gruppen sein. Aus dem Vorstehenden ergibt sich, daß eine Vielzahl von polymeren Verbindungen als Komponente E) geeignet sind, von denen nachfolgend nur als Beispiel einige besonders bevorzugte Arten näher vorgestellt werden.

Die erste Gruppe sind Polymere aus Vinylphenylcarbinolen und Copolymere der vorstehend genannten Basispolymeren mit einem Gehalt von bis zu 100 mol% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien Polymere auf der Basis von Vinylphenolen und Copolymere der vorstehenden Basispolymeren mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Daneben sind grundsätzlich Polymere und Copolymere mit allen polymerisierbaren oder pfropfbaren Alkoholen zu nennen.

Die Herstellung der Komponente E) mit Hydroxylgruppen kann nach üblichen Verfahren zur Polykondensation bzw. Pfropf- oder Copolymerisation erfolgen, weshalb sich hier nähere Angaben erübrigen.

Als Komponente E) geeignet sind auch Olefinpolymere, welche Epoxygruppen enthalten. Die Epoxygruppen können in das Olefinpolymere durch Copolymerisation oder Pfropfpolymerisation mit Epoxygruppen-tragenden copolymerisierbaren Monomeren oder durch Epoxidierung eines reagierenden Olefinpolymeren eingebaut werden. Vorteilhaft sind diese Polymeren aus 0,1 bis 50 Gew.%, insbesondere 0,5 bis 10 Gew.%, Monomeren mit Epoxygruppen aufgebaut.

Bevorzugt sind Copolymere aus mindestens 50, im besonderen mindestens 60 Gew.% aus einem oder

mehreren Olefinen mit 2 bis 10 Kohlenstoffatomen, die außerdem mindestens ein copolymerisierbares Monomeres mit Epoxygruppen und gegebenenfalls weitere copolymerisierbare Monomere enthalten.

Bevorzugte Olefine in solchen Copolymeren sind Ethylen, Propylen, Buten-1, Isobutylen, Penten-1, Hexen-1, Hepten-1, Octen-1 oder Gemische, vorzugsweise Ethylen und Propylen.

Bevorzugte epoxygruppentragende Monomere sind Ether der allgemeinen Formel

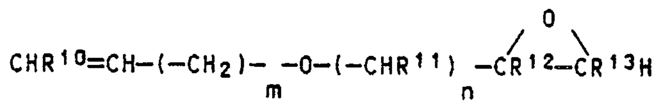

wobei

m = eine ganze Zahl zwischen 0 und 20,

n = eine ganze Zahl zwischen 1 und 10

und $R^{10}$, $R^{11}$, $R^{12}$, $R^{13}$ = H oder eine Alkylgruppe mit 1 bis 8 C-Atomen darstellen.

Bevorzugt ist m = 0 oder 1, n = 1 und $R^1$, $R^2$, $R^3$ = H.

Bevorzugte Verbindungen sind Allylglycidylether oder Vinylglycidylether. Weitere epoxygruppentragende Monomere sind epoxygruppentragende Olefine der allgemeinen Formel

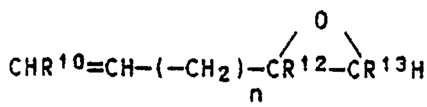

wobei m, $R^{12}$, $R^{13}$ und $R^{14}$ die gleiche Bedeutung wie in der vorausgehenden Formel haben; bevorzugt ist n = 1 bis 5, $R^{10}$ ist H oder Methyl und $R^{12}$ und $R^{13}$ sind H, Methyl oder Ethyl.

Besonders bevorzugt sind Epoxygruppen tragende Ester der Acrylsäure oder Methacrylsäure. Besondere technische Bedeutung haben Glycidylacrylat bzw. Glycidylmethacrylat erlangt.

Bevorzugte Olefinpolymere sind aufgebaut aus

a) 50 bis 90 Gew.% Olefinen mit 2 bis 10 Kohlenstoffatomen, vorzugsweise Ethylen
b) 1 bis 50 Gew.% Glycidylacrylat und/oder Glycidylmethacrylat und gegebenenfalls
c) 1 bis 49 Gew.% mindestens eines anderen copolymerisierbaren Monomeren,

wobei sich die Komponenten a, b und c jeweils auf 100 Gew.% ergänzen.

Die Glastemperatur des Olefinpolymeren liegt vorzugsweise unter 0 °C, besonders bevorzugt unter -20 °C. Bevorzugte copolymerisierbare Monomere sind (Meth)acrylate, Vinylester, Vinylether und Methylbutenol. Beispielhaft seien genannt Methyl(meth)acrylat, Ethyl(meth)acrylat, Propyl(meth)acrylat, Butyl(meth)-acrylat, besonders bevorzugt sind n-Butylacrylat und 2-Ethylhexylacrylat.

Besonders bevorzugte Olefinpolymerisate sind aufgebaut aus

a) 50 bis 98 Gew.% Ethylen
b) 1 bis 40 Gew.% Glycidyl(meth)acrylat und
c) 1 bis 45 Gew.% n-Butylacrylat und/oder 2-Ethylhexylacrylat,

besonders bewährt haben sich Olefinpolymerisate aus

a) 60 bis 95 Gew.% Ethylen
b) 3 bis 20 Gew.% Glycidyl(meth)acrylat
c) 10 bis 35 Gew.% n-Butylacrylat und/oder 2-Ethylhexylacrylat.

Die Olefinpolymeren können durch beliebige Methoden hergestellt werden, wie statistische Copolymerisation, Blockcopolymerisation und Pfropfcopolymerisation.

Bevorzugt ist die statistische Copolymerisation unter hohem Druck und bei erhöhter Temperatur. Die Polymeren sind im allgemeinen hochmolekular und haben einen Schmelzindex (MFI 190/2, 16, DIN 53 735) von 1 bis 80.

Neben den vorstehend genannten Olefincopolymeren eignen sich auch Produkte, die Carboxylgruppen oder deren Derivate enthalten und die z.B. in der EP-A 106 027 ausführlich beschrieben sind. Auf diese Anmeldung wird hier wegen näherer Einzelheiten verwiesen.

Als letzte beispielhafte Gruppe für die Komponente E) seien Styrolpolymerisate mit Carbonsäuren und/oder deren funktionellen Derivaten genannt.

Diese sind im einzelnen aus

20 bis 95 Gew.% Styrol und/oder substituierten Styrolen der allgemeinen Formel I,

0 bis 40 Gew.% eines primären und/oder sekundären Alkylesters der Acrylsäure oder Methacrylsäure mit 1 bis 8 C-Atomen im Alkoholrest, Acrylnitril und/oder Methacrylnitril,

1 bis 30 Gew.% einer polymerisierbaren Carbonsäure und/oder eines tertiären Esters derselben und/oder eines Anhydrids einer polymerisierbaren Carbonsäure mit 1 bis 20 C-Atomen aufgebaut.

Unter den tertiären Estern der Carbonsäuren werden Ester der Acryl- und Methacrylsäure, insbesondere tert.-Butylacrylat bevorzugt. Als Anhydrid sei hier stellvertretend nur Maleinsäureanhydrid genannt; als Säuren seien Acrylsäure, Maleinsäure und Fumarsäure erwähnt.

Als Beispiele für diese Gruppe seien stellvertretend Copolymerisate aus Styrol und Maleinsäureanhydrid, die gegebenenfalls noch Acrylnitril und/oder primäre oder sekundäre Alkylacrylate enthalten.

Von den vorstehend genannten, als Komponente E) geeigneten Polymeren mit funktionellen Gruppen werden Polymere mit OH-Gruppen, insbesondere das Polykondensat aus Epichlorhydrin und Bisphenol A, Styrol/Acrylnitril/Maleinsäureanhydrid-Copolymere, Styrol/Glycidylmethacrylat-Copolymere und Olefincopolymere mit Epoxygruppen besonders bevorzugt (vgl. auch die Beispiele).

Als Komponente F enthalten die erfindungsgemäßen Formmassen 5 bis 50, insbesondere 7 bis 45 und besonders bevorzugt 8 bis 40 Gew.%, bezogen auf das Gesamtgewicht der Formmassen, an Glasfasern. Dabei handelt es sich um kommerziell erhältliche Produkte.

Diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten A) bis F) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat oder Aluminiumoxid können in Mengen z.B. bis zu 5 Gew.%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.%, bezogen auf die Formmasse, zugesetzt. Färbemittel wie Farbstoffe und Pigmente können in Mengen bis zu etwa 5 Gew.%, bezogen auf die Formmasse, zugesetzt werden.

Die Herstellung der erfindungsgemäßen Formmassen kann durch Mischen der Komponenten A bis D und F und gegebenenfalls E in an sich bekannten Mischvorrichtungen erfolgen, wobei darauf zu achten ist, daß das fluorhaltige Ethylenpolymerisat eine entsprechende Teilchengröße aufweist und homogen in der Formmasse verteilt wird.

Als besonders bevorzugt hat es sich herausgestellt, die Komponente D in Form einer wäßrigen

Dispersion mit einem Feststoffgehalt von 5 bis 50, insbesondere 10 bis 50 Gew.% einzusetzen und diese Dispersion in eine Schmelze des Polyesters A einzumischen.

Dies kann vor oder nach der Zugabe der restlichen Komponenten B, C, F und gegebenenfalls E erfolgen.

In einigen Fällen hat es sich als vorteilhaft herausgestellt, ein Konzentrat (Batch) von PTFE-haltigem Polyester herzustellen und diesen dann mit den anderen Komponenten in der Schmelze zu vermischen.

Die Einarbeitung des PTFE wird bevorzugt auf einem Extruder vorgenommen, wobei Temperaturen von 240 bis 330, insbesondere von 240 bis 300 °C angewandt werden. Das bei der Abmischung auf dem Extruder freiwerdende Wasser kann über Entgasungseinrichtungen am Extruder entfernt werden.

Nach Abmischung auf dem Extruder können die Massen in an sich bekannter Weise weiterverarbeitet werden, z.B. zu Formkörpern und Folien.

Die erfindungsgemäßen Formmassen zeichnen sich durch gute Flammfestigkeit aus und tropfen auch bei geringen Anteilen an PTFE bzw. fluorhaltigem Ethylenpolymerisat nicht ab.

Darüber hinaus können sie auf einfache und sicherheitstechnisch unbedenkliche Weise hergestellt werden, ohne daß gesundheitliche Risiken zu befürchten sind.

## Beispiele

### Herstellung eines Polytetrafluorethylen-Polybutylenterephthalat-Vorprodukts (Batch)

98 Gew.% Polybutylenterephthalat (PBTP, Typ Ultradur B 4500 der Firma BASF AG) mit einer relativen Viskosität von 1,6 bestimmt als 0,5 gew.%ige Lösung in Phenol/o-Dichlorbenzol 1:1 bei 25 °C wurde in einem ZSK 53-Extruder der Firma Werner und Pfleiderer aufgeschmolzen. In die Polymer schmelze wurde 2 Gew.% Polytetrafluorethylen (bezogen auf den Feststoffanteil in der Dispersion) in Form einer wäßrigen Dispersion eingepumpt. Die Teflon®-Dispersion war vom Typ 30 N der Firma DuPont und wurde vor dem Einpumpen mit Wasser auf einen Feststoffgehalt von 10 Gew.% verdünnt.

Beim Extrudieren wurde das Wasser abgezogen.

Die Extrudertemperatur wurde auf 270 °C, die Umdrehungszahl auf 250 Umdrehungen/min und der Durchsatz auf 50 kg/h eingestellt.

Nach Extrusion wurde der Polymerstrang gekühlt, granuliert und getrocknet.

Die mittlere Teilchengröße des PTFE (Zahlenmittelwert) in der Dispersion lag im Bereich von 0,25 bis 5 µm.

### Herstellung von Formmassen

Es wurden folgende Komponenten eingesetzt:

$a_1$) Polybutylenterephthalat mit einer Viskositätszahl, bestimmt nach DIN 53 728, Teil 3 von 108

$a_2$) Pfropfpolymerisat aus

| | | | |
|---|---|---|---|
| 58,5 | Gew.% | n-Butylacrylat | Pfropfgrundlage |
| 1,2 | Gew.% | Dihydrodicyclopentadienylacrylat | |
| 30 | Gew.% | Styrol | Pfropfhülle |
| 10 | Gew.% | Acrylnitril | |

hergestellt nach dem in der DE-OS 24 44 584 beschriebenen Verfahren

$a_3$) Styrol/Acrylnitril-Copolymerisat aus 65 Gew.% Styrol und 35 Gew.% Acrylnitril mit einer Viskositätszahl von 80, gemessen in DMF, 0,5 %ig bei 25 °C

$B_1$ bromiertes Tetrabrombisphenol A-Polycarbonat mit Phenol-Endgruppen (BC 52, Fa. Great Lakes)

$B_2$ N,N'-Ethylen-bis(tetrabromphthalimid) (Saytex BT 93, Saytech Inc.)

$B_3$ Octabromdiphenylether

$B_4$ Decabromdiphenylether

$B_5$ bromiertes Polystyrol (Pyrocheck 68 PB, Fa. Ferro Chem., Bromgehalt 68 Gew.%)

$B_6$ bromiertes Tetrabrombisphenol A-Polycarbonat mit Tribromphenol-Endgruppen (BC 58, Fa. Great Lakes)

$B_7$ Perbrom-1,4-diphenoxybenzol (BT 120, Ethyl Corporation)

$B_8$ Ethylenbis-dibrom-norbornan-dicarboximid (BN 451, Saytech Inc.)

$B_9$ Tetrabromphthalsäureanhydrid (RB 49, Saytech Inc.)

$B_{10}$ Tetrabromphthalsäure-polyether (RB 79, Saytech Inc.)

$B_{11}$ Tetrabrombisphenol A (RB 100, Saytech Inc.)

$B_{12}$ 4,4'-Di(2,3-dibrompropyloxy)-3,3',5,5'-Tetrabrombisphenol A

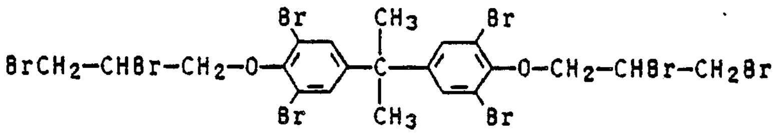

(PE 68, Great Lakes)

$B_{13}$ Poly(2,6-dibromphenylen)oxid (PO 64P, Great Lakes)

$B_{14}$ 1,3-Di(tribromphenoxy)propan (FF 680, Great Lakes)

$B_{15}$ bromiertes Epoxiharz auf Basis Epichlorhydrin/Tetrabrombisphenol A (F 2400, Fa. Makhteshim Chemicals)

$B_{16}$ Poly(pentabrombenzyl)acrylester (FR 1025 der Fa. Dead Sea Bromine)

$B_{17}$ 1,2-Di(pentabromphenoxy)ethan

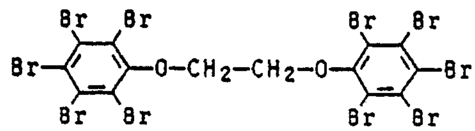

(Pyrocheck 77 B, Fa. Ferro Chem.)

$B_{18}$ Hexabromcyclododecan (FR 1026, Fa. Dead Sea Bromine)

$B_{19}$ Hexabrombenzol

$B_{20}$ bromiertes Polystyrol mit einem Bromgehalt von 60 Gew.% (Pyrocheck 60 PB, Fa. Ferro Chem.)

C: Antimontrioxid ($Sb_2O_3$)

E: Terpolymerisat aus Styrol, Acrylnitril und Maleinsäureanhydrid (Gewichtsverhältnis 68/22/10) mit einer Viskositätszahl von 80, gemessen 0,5 %ig in Dimethylformamid (DMF)

F: Glasfasern aus E-Glas

Die Komponenten $a_1$), $a_2$), $a_3$), B), D) und E) wurden gemischt, in einem Extruder aufgeschmolzen und die Glasfasern F) der Schmelze über den Extruder zugeführt. Die Extrusionstemperatur betrug 260 °C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die Schlagzähigkeit $a_n$ wurde nach DIN 53 453 bestimmt. Der Brandtest wurde nach UL 94 (Underwriters Laboratories) durchgeführt.

Die Zusammensetzung der Massen und die Ergebnisse der Messungen sind der nachfolgenden Tabelle zu entnehmen.

Dabei ist zu berücksichtigen, daß sich die Angaben bezüglich des PTFE-Gehalts (Spalte mit der Bezeichnung D) immer auf den reinen PTFE-Anteil beziehen; da das PTFE in Form des vorstehend beschriebenen Batches eingesetzt wurde, entspricht der PTFE-Gehalt nicht der Menge an zugegebenem Batch. In der mit D* gekennzeichneten Spalte sind die Mengen an zugegebenem Batch aufgeführt, die zu jeweils 100 Gew.-Teilen der restlichen Komponenten zugegeben wurden. Die im Batch D* enthaltene Menge an Polyester ist in dem für die Komponente $a_1$) angegebenen Polyestergehalt enthalten.

Tabelle

(alle Mengenangaben in Gew.%)

| Bsp.Nr. | Zusammensetzung | | | | | | | | | Schlagzähigkeit kJ/m² | Bewertung nach UL 94 |
|---|---|---|---|---|---|---|---|---|---|---|---|
| | $a_1$ | $a_2$ | $a_3$ | B | C | D | D* | E | F | | |
| 1 (Vgl.) | 41 | 8 | 9 | 8 $B_{15}$ | 4 | - | - | - | 30 | 32 | HB |
| 2 (Vgl.) | 39 | 7 | 9 | 10 $B_{15}$ | 5 | - | - | - | 30 | 29 | V-2 |
| 3 (Vgl.) | 37 | 7 | 8 | 12 $B_{15}$ | 6 | - | - | - | 30 | 27 | V-0 |
| 4 | 42,35 | 7,8 | 8,8 | 7,8 $B_{15}$ | 3,9 | 0,05 | 2,5 | - | 29,3 | 32 | V-0 |
| 5 | 43,75 | 7,6 | 8,6 | 7,6 $B_{15}$ | 3,8 | 0,1 | 5,0 | - | 28,6 | 32 | V-0 |
| 6 | 38,9 | 7,6 | 8,6 | 7,6 $B_{15}$ | 3,8 | 0,1 | 5,0 | 4,8 | 28,6 | 35 | V-0 |
| 7 | 43,7 | 7,6 | 8,6 | 7,6 $B_1$ | 3,8 | 0,1 | 5,0 | - | 28,6 | 34 | V-0 |
| 8 | 44,7 | 7,6 | 8,6 | 6,6 $B_2$ | 3,8 | 0,1 | 5,0 | - | 28,6 | 30 | V-0 |
| 9 | 45,6 | 7,6 | 8,6 | 5,7 $B_3$ | 3,8 | 0,1 | 5,0 | - | 28,6 | 35 | V-0 |
| 10 | 45,6 | 7,6 | 8,6 | 5,7 $B_4$ | 3,8 | 0,1 | 5,0 | - | 28,6 | 35 | V-0 |
| 11 | 44,7 | 7,6 | 8,6 | 6,6 $B_5$ | 3,8 | 0,1 | 5,0 | - | 28,6 | 31 | V-0 |
| 12 | 44,7 | 7,6 | 8,6 | 6,6 $B_6$ | 3,8 | 0,1 | 5,0 | - | 28,6 | 33 | V-0 |
| 13 | 45,6 | 7,6 | 8,6 | 5,7 $B_7$ | 3,8 | 0,1 | 5,0 | - | 28,6 | 35 | V-0 |
| 14 | 43,7 | 7,6 | 8,6 | 7,6 $B_8$ | 3,8 | 0,1 | 5,0 | - | 28,6 | 30 | V-0 |
| 15 | 44,7 | 7,6 | 8,6 | 6,6 $B_9$ | 3,8 | 0,1 | 5,0 | - | 28,6 | 33 | V-0 |
| 16 | 42,7 | 7,6 | 8,6 | 8,6 $B_{10}$ | 3,8 | 0,1 | 5,0 | - | 28,6 | 32 | V-0 |
| 17 | 43,7 | 7,6 | 8,6 | 7,6 $B_{11}$ | 3,8 | 0,1 | 5,0 | - | 28,6 | 36 | V-0 |
| 18 | 44,7 | 7,6 | 8,6 | 6,6 $B_{12}$ | 3,8 | 0,1 | 5,0 | - | 28,6 | 34 | V-0 |
| 19 | 44,7 | 7,6 | 8,6 | 6,6 $B_{13}$ | 3,8 | 0,1 | 5,0 | - | 28,6 | 30 | V-0 |
| 20 | 44,7 | 7,6 | 8,6 | 6,6 $B_{14}$ | 3,8 | 0,1 | 5,0 | - | 28,6 | 32 | V-0 |
| 21 | 43,7 | 7,6 | 8,6 | 7,6 $B_{15}$ | 3,8 | 0,1 | 5,0 | - | 28,6 | 34 | V-0 |
| 22 | 44,7 | 7,6 | 8,6 | 6,6 $B_{16}$ | 3,8 | 0,1 | 5,0 | - | 28,6 | 32 | V-0 |
| 23 | 44,7 | 7,6 | 8,6 | 6,6 $B_{17}$ | 3,8 | 0,1 | 5,0 | - | 28,6 | 35 | V-0 |
| 24 | 44,7 | 7,6 | 8,6 | 6,6 $B_{18}$ | 3,8 | 0,1 | 5,0 | - | 28,6 | 34 | V-0 |
| 25 | 45,6 | 7,6 | 8,6 | 5,7 $B_{19}$ | 3,8 | 0,1 | 5,0 | - | 28,6 | 34 | V-0 |
| 26 | 45,6 | 7,6 | 8,6 | 5,7 $B_{20}$ | 3,8 | 0,1 | 5,0 | - | 28,6 | 31 | V-0 |

## Ansprüche

1. Flammgeschützte thermoplastische Formmassen, enthaltend als wesentliche Komponenten
A) 45 bis 90 Gew.% einer Mischung aus
$a_1$) 50 bis 80 Gew.% eines Polyesters
$a_2$) 10 bis 25 Gew.% eines Pfropfpolymerisats aufgebaut ausa $a_{21}$) 50 bis 90 Gew.% einer Pfropfgrundlage aus einem kautschukelastischen Polymeren auf Basis von $a_{211}$) 95 bis 99,9 Gew.% eines $C_2$-$C_{10}$-Alkylacrylats und
$a_{212}$) 0,1 bis 5 Gew.% eines polyfunktionellen Monomeren mit mindestens zwei olefinischen, nicht konjugierten Doppelbindungen
$a_{22}$) 10 bis 50 Gew.% einer Pfropfauflage aus
$a_{221}$) 20 bis 90 Gew.% Styrol oder substituierten Styrolen der allgemeinen Formel I

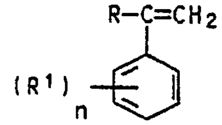

(I)

wobei R einen Alkylrest mit 1 bis 8 C-Atomen, ein Wasserstoffatom oder ein Halogenatom und $R^1$ einen

Alkylrest mit 1 bis 8 C-Atomen oder ein Halogenatom darstellen und n den Wert 0, 1, 2 oder 3 hat oder deren Mischungen und

$a_{222}$) 10 bis 80 Gew.% Acrylnitril, Methacrylnitril, Acrylsäureester oder Methacrylsäureester oder deren Mischungen

und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 50 Gew.% Acrylnitril oder Methacrylnitril oder deren Mischungen,

B) 4 bis 30 Gew.% eines Flammschutzmittels

C) 0 bis 15 Gew.% einer synergistisch wirkenden Metallverbindung eines Metalls der fünften Hauptgruppe des Periodensystems

D) 0,01 bis 3 Gew.% eines fluorhaltigen Ethylenpolymerisats, welches homogen verteilt in der Formmasse vorliegt und einen mittleren Teilchendurchmesser (Zahlenmittelwert) von 0,05 bis 10 $\mu$ aufweist, sowie darüber hinaus

E) 0 bis 20 Gew.% einer polymeren Komponente mit Carboxyl-, Carboxylderivat-, Hydroxyl- oder Epoxygruppen, und

F) 5 bis 50 Gew.% Glasfasern.

2. Thermoplastische Formmassen nach Anspruch 1, gekennzeichnet durch folgende Gehalte:

A) 45 bis 80 Gew.%

B) 7 bis 25 Gew.%

C) 4 bis 12 Gew.%

D) 0,05 bis 2 Gew.%

E) 0 bis 12 Gew.%

F) 8 bis 40 Gew.%

3. Verwendung der flammgeschützten thermoplastischen Formmassen gemäß den Ansprüchen 1 und 2 zur Herstellung von Formkörpern und Formteilen.

4. Formkörper, erhältlich aus flammgeschützten thermoplastischen Formmassen gemäß den Ansprüchen 1 und 2 als wesentliche Komponenten.

5. Verfahren zur Herstellung von flammgeschützten thermoplastischen Formmassen gemäß den Ansprüchen 1 und 2, dadurch gekennzeichnet, daß man das fluorhaltige Ethylenpolymerisat D) in Form einer wäßrigen Dispersion mit einem Feststoffgehalt von 10 bis 50 Gew.% in eine Schmelze des Polyesters $a_1$) einmischt und vor oder nach der Zugabe der Komponente D) die Komponenten $a_2$, $a_3$, C, E und F zugibt.